# EUROPEAN PATENT APPLICATION

(11) **EP 4 667 441 A1**
(43) Date of publication of application: **24.12.2025**
(21) Application number: 25182786.1
(22) Date of filing: 13.06.2025
(51) Int. Cl.: C04B 35/573, C04B 35/58, C04B 35/65, C04B 35/80, C04B 35/628

(54) **REACTIVE INFILTRATION WITH SILICIDE FORMING BINARY ALLOYS**

(30) Priority: 18.06.2024 US 202418747331
(71) Applicant: RTX Corporation, Farmington, CT 06032 (US)
(72) Inventor: SMITH, Kenneth D., East Longmeadow, 01028 (US); SRINIVASAN, Gajawalli V., South Windsor, 06074 (US); HEJAZI, Vahid, Carlsbad, 92009 (US); HOLOWCZAK, John E., South Windsor, 06074 (US); SUDRE, Olivier H., Glastonbury, 06073 (US); MASTROBATTISTO, Daniel, Aliso Viejo, 92656 (US)
(74) Representative: Dehns

(57) **Abstract**

A gas turbine engine component includes a component including at least one ceramic matrix composite material, the at least one ceramic matrix composite material further includes a ceramic fiber reinforcement containing at least one ceramic fiber or at least one ceramic fiber tow; and a matrix material disposed around and in contact with the at least one ceramic fiber or the at least one ceramic fiber tow; the matrix material contains at least one eutectic alloy, at least one metal-rich alloy, or combinations thereof; either the at least one eutectic alloy or the at least one metal-rich alloy includes silicon and at least one of the following alloy constituents: zirconium, hafnium, tungsten, tantalum, molybdenum, niobium, and iridium; and, either the at least one eutectic alloy or the at least one metal-rich alloy exhibits and possesses a melting point range of approximately 1,250°C to approximately 1,650°C.

## Description

### FIELD OF THE INVENTION

The subject matter disclosed herein relates to the fabrication of ceramic matrix composite (CMC) materials, in particular, to the reactive infiltration of CMCs with silicide forming binary alloys.

### BACKGROUND OF THE INVENTION

Silicon (Si) melts at 2570 °F (1410 °C) and this melting temperature can often be a limiting factor for the overall use temperature of silicon melt infiltrated CMC components at higher temperatures, e.g., at about or above this melting point. With a desire to operate, for example, at 2500 °F or above, the infiltrated metal between and around the fibers of the CMC materials needs to melt at a higher temperature. However, higher temperature metals have been generally found to have poor properties for use in CMCs or melt at a temperature too high that can damage the fibers during infiltration.

### SUMMARY OF THE INVENTION

In general, the present disclosure relates to the fabrication of ceramic matrix composite (CMC) materials via reactive infiltration. In particular, the present disclosure relates to the reactive infiltration of CMCs with silicide forming binary alloys.

According to an aspect of the present disclosure, there is provided a gas turbine engine component, comprising: a component comprising at least one ceramic matrix composite material, the at least one ceramic matrix composite material comprising a ceramic fiber reinforcement comprising at least one ceramic fiber or at least one ceramic fiber tow; anda matrix material disposed around and in contact with the at least one ceramic fiber or the at least one ceramic fiber tow; wherein the matrix material comprises at least one eutectic alloy, at least one metal-rich alloy, or combinations thereof; wherein either the at least one eutectic alloy or the at least one metal-rich alloy comprises silicon and at least one of the following alloy constituents: zirconium, hafnium, tungsten, tantalum, molybdenum, niobium, and iridium; wherein either the at least one eutectic alloy or the at least one metal-rich alloy comprises a melting point range of approximately 1,250°C to approximately 1,650°C.

According to another aspect of the present disclosure, there is provided a ceramic matrix composite material, comprising: at least one ceramic matrix composite material, the at least one ceramic matrix composite material comprising a ceramic fiber reinforcement comprising at least one ceramic fiber or at least one ceramic fiber tow; and a matrix material disposed around and in contact with the at least one ceramic fiber or the at least one ceramic fiber tow; wherein the matrix material comprises at least one eutectic alloy, at least one metal-rich alloy, or combinations thereof; wherein either the at least one eutectic alloy or the at least one metal-rich alloy comprises silicon and at least one of the following alloy constituents: zirconium, hafnium, tungsten, tantalum, molybdenum, niobium, and iridium; wherein either the at least one eutectic alloy or the at least one metal-rich alloy comprises a melting point range of approximately 1,250°C to approximately 1,650°C.

According to yet another aspect of the present disclosure, there is provided a method of fabricating the ceramic matrix composite material comprising: infiltrating at least one eutectic alloy constituent, at least one metal-rich alloy constituent, or combinations thereof, into, around and in contact with at least one ceramic fiber reinforcement comprising at least one ceramic fiber or at least one ceramic fiber tow, and a carbon source material; reacting either the at least one eutectic alloy constituent or the at least one metal-rich alloy constituent with the carbon source material; forming at least one matrix material within, around and in contact with the at least one ceramic fiber or the at least one ceramic fiber tow, the at least one matrix material comprising at least one eutectic alloy, at least one metal-rich alloy, and combinations thereof; and optionally further comprising at least one silicide, at least one carbide, residual free silicon, or combinations thereof; wherein the at least one eutectic alloy or at least one metal-rich alloy comprises silicon and at least one of the following alloy constituents: zirconium, hafnium, tungsten, tantalum, molybdenum, niobium, and iridium; wherein either the at least one eutectic alloy or the at least one metal-rich alloy comprises a melting point range of approximately 1,250°C to approximately 1,650°C.

In further examples of the present disclosure, including further examples of the above, the ceramic matrix composite material comprises an amount of residual free silicon present at approximately 0 percent by weight to approximately 4 percent by weight based on the weight of the ceramic matrix composite material.

In further examples of the present disclosure, including further examples of the above, either the eutectic alloy or the metal-rich alloy comprises an amount of silicon present at approximately 30 percent by weight to approximately 85 percent by weight based on the weight of either the eutectic alloy or the metal-rich alloy.

In further examples of the present disclosure, including further examples of the above, the eutectic alloy comprises an amount of silicon present at approximately 50 percent by weight to approximately 85 percent by weight based on the weight of the eutectic alloy.

In further examples of the present disclosure, including further examples of the above, the eutectic alloy comprises an amount of silicon present at approximately 50 percent by weight to approximately 60 percent by weight based on the weight of the eutectic alloy, wherein the eutectic alloy further comprises hafnium.

In further examples of the present disclosure, including further examples of the above, the eutectic alloy comprises an amount of silicon present at approximately 75 percent by weight to approximately 85 percent by weight based on the weight of the eutectic alloy, wherein the eutectic alloy further comprises zirconium.

In further examples of the present disclosure, including further examples of the above, the metal-rich alloy comprises an amount of silicon present at approximately 30 percent by weight to approximately 80 percent by weight based on the weight of the metal-rich alloy.

In further examples of the present disclosure, including further examples of the above, the metal-rich alloy comprises an amount of silicon present at approximately 35 percent by weight to approximately 45 percent by weight based on the weight of the metal-rich alloy, wherein the metal-rich alloy further comprises hafnium.

In further examples of the present disclosure, including further examples of the above, the metal-rich alloy comprises an amount of silicon present at approximately 68 percent by weight to approximately 75 percent by weight based on the weight of the metal-rich alloy, wherein the metal-rich alloy further comprises zirconium.

In further examples of the present disclosure, including further examples of the above, the ceramic matrix composite material comprises an amount of residual free silicon present at approximately 0 percent by weight to approximately 4 percent by weight based on the weight of the ceramic matrix composite material.

In further examples of the present disclosure, including further examples of the above, either the eutectic alloy or the metal-rich alloy comprises an amount of silicon present at approximately 30 percent by weight to approximately 85 percent by weight based on the weight of either the eutectic alloy or the metal-rich alloy.

In further examples of the present disclosure, including further examples of the above, the eutectic alloy comprises an amount of silicon present at approximately 50 percent by weight to approximately 85 percent by weight based on the weight of the eutectic alloy.

In further examples of the present disclosure, including further examples of the above, the eutectic alloy comprises an amount of silicon present at approximately 50 percent by weight to approximately 60 percent by weight based on the weight of the eutectic alloy, wherein the eutectic alloy further comprises hafnium.

In further examples of the present disclosure, including further examples of the above, the eutectic alloy comprises an amount of silicon present at approximately 75 percent by weight to approximately 85 percent by weight based on the weight of the eutectic alloy, wherein the eutectic alloy further comprises zirconium.

In further examples of the present disclosure, including further examples of the above, the metal-rich alloy comprises an amount of silicon present at approximately 30 percent by weight to approximately 80 percent by weight based on the weight of the metal-rich alloy.

In further examples of the present disclosure, including further examples of the above, the metal-rich alloy comprises an amount of silicon present at approximately 35 percent by weight to approximately 45 percent by weight based on the weight of the metal-rich alloy, wherein the metal-rich alloy further comprises hafnium.

In further examples of the present disclosure, including further examples of the above, the metal-rich alloy comprises an amount of silicon present at approximately 68 percent by weight to approximately 75 percent by weight based on the weight of the metal-rich alloy, wherein the metal-rich alloy further comprises zirconium.

In further examples of the present disclosure, including further examples of the above, the exemplary method further comprises infiltrating the carbon source material into, around and in contact with the ceramic fiber or the ceramic fiber tow of the ceramic fiber reinforcement, wherein the step of infiltrating comprises at least one infiltration technique comprising any one of the following: chemical vapor infiltration, chemical vapor deposition, physical vapor deposition, atomic layer deposition, molecular-beam epitaxy, and combinations thereof.

### BRIEF DESCRIPTION OF FIGURES

The features of the disclosure believed to be novel and the elements characteristic of the invention are set forth with particularity in the appended claims. The figures are for illustration purposes only and are not drawn to scale. The disclosure itself, however, both as to organization and method of operation, can best be understood by reference to the description of the preferred embodiment(s) which follows, taken in conjunction with the accompanying drawings in which:
FIG. 1 shows a phase diagram of an Si+ZrSi₂ system.
FIG. 2 shows a diagram of a region where there is both no free Si and no remaining carbon present for an exemplary eutectic Zr-Si alloy according to equilibrium thermodynamic predictions.
FIG. 3 shows a diagram of a region where there is no free Si and no remaining carbon for an exemplary 1500°C melting Zr-Si alloy according to equilibrium thermodynamic predictions.
FIG. 4 shows a diagram of a region where there is both no free Si and no remaining carbon present for an exemplary eutectic Hf-Si alloy according to equilibrium thermodynamic predictions.
FIG. 5 shows a diagram of a region where there is no free Si present and no remaining carbon for an exemplary 1500°C melting Hf-Si alloy, according to equilibrium thermodynamic predictions.
FIG. 6 is an illustration of a flowchart of at least one exemplary method for fabricating CMC preforms disclosed herein.
FIG. 7 shows a microstructure of an exemplary resultant matrix of a CMC preform fabricated using an exemplary Si-Hf alloy.
FIG. 8 shows a microstructure of an exemplary resultant matrix of a CMC preform fabricated using an exemplary Si-Zr alloy.
FIG. 9 shows a microstructure of a CMC material where unreacted diamond particles are present in a resultant matrix for a CMC preform.
FIG. 10 shows a breach of a CVI SiC shell of a resultant matrix for a CMC preform.

### DETAILED DESCRIPTION OF THE INVENTION

The embodiments of the present disclosure can comprise, consist of, and consist essentially of the features and/or steps described herein, as well as any of the additional or optional ingredients, components, steps, or limitations described herein or would otherwise be appreciated by one of skill in the art. It is to be understood that all concentrations disclosed herein are by weight percent (wt. %.) based on a total weight of the composition unless otherwise indicated.

A desired state of the art would be having an alloy for use as a matrix material that can melt within a temperature range that can be tolerated by the fibers of the CMC preform, so as to not damage the fibers, but be high enough to allow for the use of resultant CMC parts at higher temperatures than Si alone allows. Such an alloy would need to have a melting point that is above a desired use temperature, the selection of which alloy would also have to be based on fiber properties and conditions having to be taken into consideration.

When considering fiber properties, any carbon-containing fibers suitable for use in CMCs may be utilized. For example, suitable carbon-containing fibers may include, but are not limited to, silicon carbide (SiC) fibers. For instance, SiC fibers for use herein may include, but are not limited to, Hi-Nicalon^{™} and Hi-Nicalon^{™} Type S fibers commercially available from Nippon Carbon Co., Ltd., Tokyo, Japan; Tyranno ZMI and Tyranno SA fibers of Tyranno Fibers^{®} commercially available from UBE Corporation, Tokyo, Japan; Sylramic fibers commercially available from COI Ceramics, San Diego, California; combinations thereof, and the like. The aforementioned SiC fibers may exhibit and possess melting point(s) above the temperature values and ranges exhibited and possessed by the exemplary eutectic or metal-rich alloys disclosed herein.

The present disclosure is directed to the use of Si-alloys, which use allows for reactive alloy infiltration that can result in no or substantially no free Si present in the CMC preform after the infiltration reaction is complete. The Si of the alloy reacts with a quantity of a carbon source material, which is typically previously infiltrated or already present in the CMC preform. Any carbon source material capable of being deposited and forming carbon particles or carbon-containing films upon decomposition may be suitable for use herein. Suitable carbon source material may include, but is not limited to, carbon-forming resins, carbon-forming polymers, carbon black, diamonds, chemical vapor infiltrated (CVI) deposited carbon, slurry deposited carbon, combinations thereof, and the like. The reactive infiltration of a silicon alloy within the CMC preform results in SiC being formed in-situ. The Si content in the resultant alloy is controlled so as to ensure that once the reactive infiltration occurs with, for example, carbon, all or substantially all of the Si is converted to SiC while some Si content or remaining Si content forms silicide(s) and/or carbide(s). However, any Si of the Si-alloy should ideally fully or nearly fully react to form a thoroughly solid matrix for the CMC material and optimally leave no residual free silicon present.

In carrying out at least one embodiment disclosed herein, a baseline approach has been to start with eutectic alloys as these alloys have relatively low melting points, yet yield high temperature phases after reaction, especially in view of the resultant silicides and carbides that can be formed, which have significantly higher melting points than Si alone. In particular, the use of a low melting alloy can be used to avoid damage to the fibers of the CMC perform during reactive infiltration. In fact, using a low melting point alloy to form the matrix in the CMC preform can yield a resultant matrix that can withstand higher temperatures than if Si alone were used.

Generally speaking, eutectic alloys can contain two or more metals, wherein the resultant alloy has a melting point lower than its individual constituents. A eutectic alloy forms from a solid homogeneous mixture of individual metal components when there is a specific ratio between such components, which is often represented by the provision of a phase diagram. Various constituents may be considered when selecting eutectic alloys for use herein. Suitable constituents may include, but are not limited to, zirconium (Zr), hafnium (Hf), tungsten (W), tantalum (Ta), molybdenum (Mo), niobium (Nb), iridium (Ir), silicon (Si), combinations thereof, and the like. In particular, suitable combinations may include, but are not limited to, binary alloys such as Zr-Si, Hf-Si, W-Si, Ta-Si, Mo-Si, Nb-Si, and Ir-Si, as well as each binary alloy's various respective metal rich embodiments. More particularly, Hf-Si, Zr-Si and Ir-Si alloys, as well as each binary alloy's various respective metal rich embodiments, may serve as exemplary infiltrant materials for use herein. After reaction with the carbon source material previously infiltrated or already present within the CMC preform, the final composition within the CMC preform may be, for example, ZrSi₂, SiC and ZrC, such that all or substantially all of the Si is reacted/converted to form either silicide(s), e.g., ZrSi₂ or SiC or even other carbide(s). As such, different predetermined effects of the exemplary eutectic or metal-rich alloys on the resultant matrix material may be controlled by, such as but not limited to, the selection of specific eutectic alloy constituent(s), or by the selection of a specific alloy constituent to be present as a metal rich side, or a combination thereof.

As mentioned above, the exemplary eutectic alloy compositions can exhibit and possess at least one metal-rich embodiment, that is, a metal-rich side of a eutectic point for a specific metal mixture. For instance, a metal-rich side of a eutectic point for a specific metal mixture is observed to the right of the "V" notch in a phase diagram of the specific metal mixture, wherein the "V" notch is the eutectic composition defined by the specific metal mixture. For exemplary Zr-Si and Hf-Si metal-rich specific metal mixtures, respectively, the Zr and Hf weight fractions of each alloy are greater than their respective mass fractions that would be found in each respective alloy at each alloy's respective eutectic point. In turn, the excess Zr or Hf metal, respectively, results in more silicide being formed and less Si present. In addition, less Si present ensures the Si that may be present can be reactively consumed as entirely as possible. Generally, the melting point ranges of the respective exemplary metal-rich specific metal mixtures are not too high, for example, not exceeding approximately 1,650°C (3,002°F), so that the resultant CMC preform is not negatively impacted. In particular, the exemplary metal-rich specific metal mixtures may exhibit and possess a melting point of approximately 1,250°C (2,282°F) to approximately 1,650°C (3,002°F) so as to lessen and/or eliminate the negative impact upon the resultant CMC preform once the reactive infiltration is complete. More particularly, the exemplary metal-rich specific metal mixtures may exhibit and possess a melting point of approximately 1,350°C (2,462°F) to approximately 1,500°C (2,732°F). The aforementioned exemplary temperature ranges are also suitable for the respective exemplary eutectic alloys from which the aforementioned exemplary metal-rich specific metal mixtures are derived.

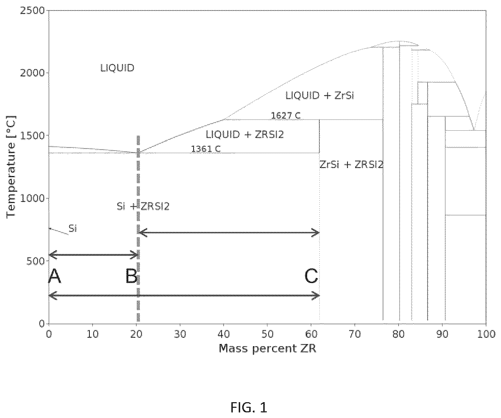

Referring now to Fig. 1, a phase diagram for a ZrSi system is illustrated. In the phase diagram, a eutectic composition line, that is, a vertical line of dash-marks, is shown. The aforementioned eutectic composition line demonstrates the approximate temperatures and Zr fraction that a eutectic alloy forms at a single temperature (See Fig. 1). In addition, multiple lines demarcating areas A, B and C are also shown for the purpose of illustrating the Lever rule parameter: % of Si = (B-C)/(A-C); and % of ZrSi₂ = (A-B)/(A-C) (See Fig. 1). With respect to the Lever rule, the aforementioned parameter determines the fraction of each phase present. For instance, in at least one embodiment, when Si and ZrSi₂ are present as shown, the fractions of Si and ZrSi₂ can be determined in each phase using the Lever rule. Likewise, in at least another embodiment, when Si and HfSi₂ are present, the fractions of Si and HfSi₂ can be determined in each phase using the Lever rule.

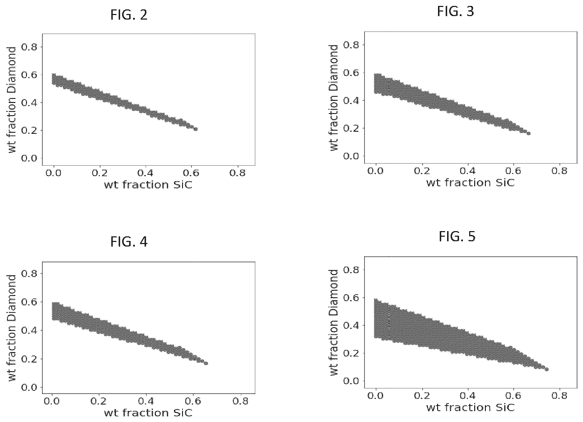

Referring now to Figs. 2-5, Figs. 2 and 4 illustrate a baseline eutectic Zr-Si alloy and a baseline eutectic Hf-Si alloy respectively plotted as a weight fraction of SiC versus a weight fraction of Diamond, the carbon source material. In contrast, Figs. 3 and 5 illustrate an exemplary Zr-Si alloy at 1,500°C (2,732°F) and an exemplary Hf-Si alloy at 1,500°C (2,732°F) respectively. In each of Figs. 2-5, the shaded region indicates where there is no free Si and no remaining carbon source material present. With respect to Figs. 3 and 5 specifically, the shaded regions thus also indicate both the Si and carbon source material originally present are consumed during reactive infiltration of the exemplary Zr-Si alloy at 1,500°C (2,732°F) to form the resultant SiC with the remainder present being either silicide(s) or other carbide(s).

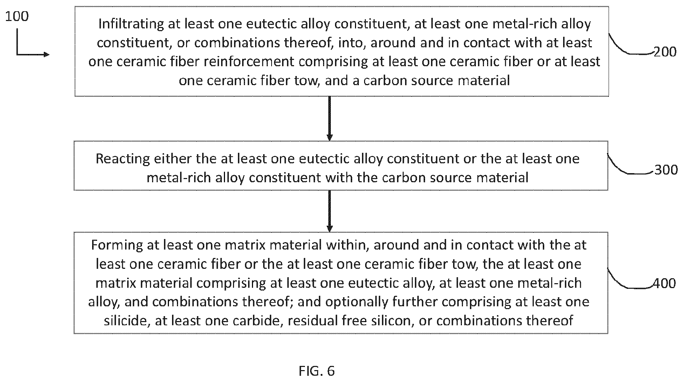

Referring to Fig. 6, a flowchart 100 illustrating a method of fabricating a ceramic matrix composite material is shown. In at least one embodiment, at an exemplary step 200, at least one eutectic alloy constituent, at least one metal-rich alloy constituent, or combinations thereof, may be infiltrated into, around and in contact with at least one ceramic fiber reinforcement comprising at least one ceramic fiber or at least one ceramic fiber tow, and a carbon source material (See Fig. 6). Next, at an exemplary step 300, either at least one eutectic alloy constituent or at least one metal-rich alloy constituent may be reacted with the carbon source material (See Fig. 6). Next, at an exemplary step 400, at least one matrix material may be formed within, around and in contact with at least one ceramic fiber or at least one ceramic fiber tow (See Fig. 6). The matrix material may include at least one eutectic alloy, at least one metal-rich alloy, and combinations thereof. The matrix material may optionally further include at least one silicide, at least one carbide, residual free silicon, or combinations thereof.

The eutectic alloy or metal-rich alloy may include silicon and at least one of the following alloy constituents: zirconium, hafnium, tungsten, tantalum, molybdenum, niobium, and iridium. The one eutectic alloy or metal-rich alloy may exhibit and possess a melting point range of approximately 1,250°C to approximately 1,650°C. The resultant ceramic matrix material may contain more of the second metal than the eutectic alloy of the metals. The melting point of the resultant ceramic matrix material may be higher than the melting point of a matrix material formed from a carbon source and Si alone without the presence of the additional alloy constituent metal disclosed herein. Infiltration may be achieved using any number of techniques, such as but not limited to, slurry infiltration, combinations thereof, and the like. In yet at least one additional embodiment, the carbon source may include, such as but not limited to, diamonds, carbon black, surface-modified carbon black, carbon-forming resin, carbon-forming polymer, combinations thereof, and the like. In the alternative, in yet at least one additional embodiment, the carbon source material may be deposited using at least one technique including, but not limited to, chemical vapor infiltration (CVI), chemical vapor deposition (CVD), physical vapor deposition (PVD), atomic layer deposition (ALD), molecular-beam epitaxy (MBE), combinations thereof, and the like. In such an alternative embodiment, suitable carbon source materials may include any carbon-containing material capable of being deposited and forming carbon particles upon decomposition may be suitable for use herein.

Referring now to Table 1 shown below, at least one exemplary embodiment of eutectic mixture(s) including, but not limited to, metal rich options, are provided. In particular, computer modelling has demonstrated the exemplary Hf-Si and Zr-Si alloys systems shown below exhibit and possess no free Si once the infiltration reaction is completed. These exemplary alloy systems may include eutectic compositions and/or a metal rich embodiment as discussed above. After reaction, the alloy reacts to form, such as but not limited to, silicide(s), carbide(s) and, in particular, SiC too. The metal rich alloys beyond the eutectic were selected to exhibit and possess melt temperatures up to 2,730 °F (1,500 °C) so that the fibers of the CMC preform are not damaged during infiltration.

**Table 1**

| **Alloy System** | **Type** | **Melt Point (°F)*** | **Wt% silicon** | **Wt% second element** |
|---|---|---|---|---|
| Hf-Si | Eutectic | 2,425 | 56.7 | 43.3 |
| Hf-Si | Metal-rich | 2,640 | 43.1 | 56.9 |
| Hf-Si | Metal-rich | 2,370 | 37.9 | 62.1 |
| Zr-Si | Eutectic | 2,480 | 79.6 | 20.4 |
| Zr-Si | Metal-rich | 2,640 | 73.5 | 26.5 |
| Zr-Si | Metal-rich | 2,370 | 70.1 | 29.9 |

| | | | | |
|---|---|---|---|---|
| * (T(°F) - 32) × 5/9 = T(°C) | | | | |

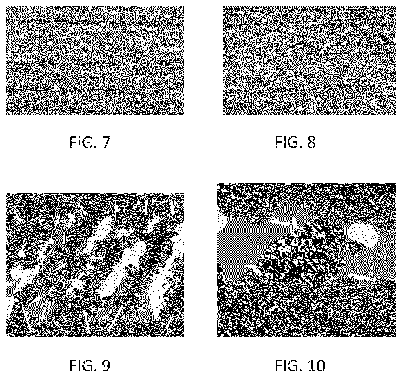

Next, with reference to Figs. 7 and 8, when carrying out the above-mentioned reactive infiltration technique, at least one observation with respect to the use of the exemplary 2,425 °F (1329 °C) Hf-Si eutectic alloy (See Fig. 7) and the exemplary 2,640 °F (1449 °C)melting Zr-Si metal-rich alloy (See Fig. 8) of Table 1 above will be discussed now. In at least one observation, the residual free Si content can be reduced to approximately 3% to 4% by weight based on the weight of the resultant matrix material. For instance, the exemplary 2,425 °F (1328 °C) Hf-Si eutectic alloy of Fig. 7 can exhibit and possess a residual free Si content of approximately 4% by weight based on the weight of the resultant matrix material. And, the exemplary 2,640 °F (1449 °C) melting Zr-Si alloy of Fig. 8 can exhibit and possess a residual free Si content of approximately 3% by weight based on the weight of the resultant matrix material. In fact, in at least some exemplary embodiments, the residual Si content may be reduced further, for example, to 2.5 %, 2 %, 1.5%, 1 %, 0.5 %, 0.3 %, 0.1 %, or even reduced further yet to, for example, approximately 0 % or even 0%.

In at least one additional observation as shown in the microstructure of Fig. 9, when the carbon source material is diamond, the Si of the exemplary eutectic or metal-rich alloy, e.g., the exemplary 2425 °F (1328 °C) Hf-Si eutectic alloy or the exemplary 2640 °F (1449 °C) melting Zr-Si metal-rich alloy of Table 1, may not react entirely with the diamond originally present. As indicated by the white colored arrows throughout the microstructure of Fig. 9, unreacted diamond particles are present and appear as the darkest colored particulate material. While carrying out the reactive infiltration, SiC may form a barrier at the surface of the CMC preform, and the C atoms of the diamond may not have adequate access to contact and react with the free Si present of, for example, the exemplary 2425 °F (1328 °C) Hf-Si eutectic alloy or the exemplary 2640 °F (1449 °C) melting Zr-Si metal-rich alloy of Table 1. This observed effect may represent a competition between reaction rate and diffusion. For example, the reaction may occur quickly and form a SiC shell around a particle whose interior contains diamond. Once the SiC shell is formed, the diffusion of diamond through the SiC shell may become very slow and may effectively stop the reaction as diamond is no longer accessible as a reactive material. In addition, there may also be a balance between diamond size and the rate of reaction required to consume all the diamond present before the SiC shell may form completely, encapsulate the remaining carbon, and leave unreactive carbon and potential free Si within the SiC shell. At least one approach to minimize this observed effect is using fine particulate diamond particles rather than larger particulate diamond particles as the original carbon source material. For instance, in the embodiment shown in the microphotograph of Fig. 9, the observed effect stems in part from utilizing larger particulate diamond particles exhibiting and possessing a particle size of 1 µm to 2 µm. In contrast, fine diamond particles having a particle size of less than 1 µm are expected to fully react under the similar conditions and consume entirely the fine diamond particles.

In yet at least one additional observation as shown in the microstructure of Fig. 10, SiC may react with molten Si, when used alone, during reactive infiltration, thus forming a barrier through which free Si enters and may contact the fibers of the CMC preform. Such contact during reactive infiltration constitutes a breach of the fiber. In the microphotograph of Fig. 10, a breach is depicted by a brighter contrast on the circle outline, which shows the attack. In addition, the breach also may frequently exhibit a lighter gray color as compared to an absence of a breach where the aforementioned reaction occurs throughout the CMC. Such breaches can negatively impact the fibers specifically and the CMC preform as a whole. At least one approach to minimize this observed effect is using any one of the exemplary eutectic alloys or exemplary metal-rich alloys contemplated herein rather than Si alone.

The exemplary eutectic alloys and exemplary metal-rich alloys disclosed herein for CMC preforms provide a highly promising path forward for reducing the residual free Si content in at least one embodiment of a CMC preform to approximately 0% or even 0%. After the selection of certain alloy systems disclosed herein, one can further refine processing conditions and parameters to ensure all the original carbon source material reacts and leaves no silicon behind. The resultant CMC material will be superior by exhibiting and possessing increased heat tolerance and potentially increased strength as well, and without damage or at most minimal damage to the fibers during the reactive infiltration of the CMC preform.

While the present disclosure has been particularly described, in conjunction with specific preferred embodiments, it is evident that many alternatives, modifications and variations will be apparent to those skilled in the art in light of the foregoing description. It is therefore contemplated that the appended claims will embrace any such alternatives, modifications and variations as falling within the true scope of the present disclosure.

## Claims

1. A gas turbine engine component, comprising:
a component comprising at least one ceramic matrix composite material, the at least one ceramic matrix composite material comprising:
a ceramic fiber reinforcement comprising at least one ceramic fiber or at least one ceramic fiber tow; and
a matrix material disposed around and in contact with the at least one ceramic fiber or the at least one ceramic fiber tow;
wherein the matrix material comprises at least one eutectic alloy, at least one metal-rich alloy, or combinations thereof;
wherein either the at least one eutectic alloy or the at least one metal-rich alloy comprises silicon and at least one of the following alloy constituents: zirconium, hafnium, tungsten, tantalum, molybdenum, niobium, and iridium;
wherein either the at least one eutectic alloy or the at least one metal-rich alloy comprises a melting point range of approximately 1,250°C to approximately 1,650°C.

2. A ceramic matrix composite material, comprising:
at least one ceramic matrix composite material, the at least one ceramic matrix composite material comprising:
a ceramic fiber reinforcement comprising at least one ceramic fiber or at least one ceramic fiber tow; and
a matrix material disposed around and in contact with the at least one ceramic fiber or the at least one ceramic fiber tow;
wherein the matrix material comprises at least one eutectic alloy, at least one metal-rich alloy, or combinations thereof;
wherein either the at least one eutectic alloy or the at least one metal-rich alloy comprises silicon and at least one of the following alloy constituents: zirconium, hafnium, tungsten, tantalum, molybdenum, niobium, and iridium;
wherein either the at least one eutectic alloy or the at least one metal-rich alloy comprises a melting point range of approximately 1,250°C to approximately 1,650°C.

3. The gas turbine engine component of claim 1 or ceramic matrix composite material of claim 2, wherein the at least one ceramic matrix composite material comprises an amount of residual free silicon present at approximately 0 percent by weight to approximately 4 percent by weight based on the weight of the at least one ceramic matrix composite material.

4. The gas turbine engine component or ceramic matrix composite material of any preceding claim, wherein either the at least one eutectic alloy or the at least one metal-rich alloy comprises an amount of silicon present at approximately 30 percent by weight to approximately 85 percent by weight based on the weight of either the at least one eutectic alloy or the at least one metal-rich alloy.

5. The gas turbine engine component or ceramic matrix composite material of claim 4, wherein the at least one eutectic alloy comprises an amount of silicon present at approximately 50 percent by weight to approximately 85 percent by weight based on the weight of the at least one eutectic alloy.

6. The gas turbine engine component or ceramic matrix composite material of claim 5, wherein the at least one eutectic alloy comprises an amount of silicon present at approximately 50 percent by weight to approximately 60 percent by weight based on the weight of the at least one eutectic alloy, wherein the at least one eutectic alloy further comprises hafnium.

7. The gas turbine engine component or ceramic matrix composite material of claim 5, wherein the at least one eutectic alloy comprises an amount of silicon present at approximately 75 percent by weight to approximately 85 percent by weight based on the weight of the at least one eutectic alloy, wherein the at least one eutectic alloy further comprises zirconium.

8. The gas turbine engine component or ceramic matrix composite material of any of claims 1 to 3, wherein the at least one metal-rich alloy comprises an amount of silicon present at approximately 30 percent by weight to approximately 80 percent by weight based on the weight of the at least one metal-rich alloy.

9. The gas turbine engine component or ceramic matrix composite material of claim 8, wherein the at least one metal-rich alloy comprises an amount of silicon present at approximately 35 percent by weight to approximately 45 percent by weight based on the weight of the metal-rich alloy, wherein the at least one metal-rich alloy further comprises hafnium.

10. The ceramic matrix composite material of claim 8, wherein the at least one metal-rich alloy comprises an amount of silicon present at approximately 68 percent by weight to approximately 75 percent by weight based on the weight of the at least one metal-rich alloy, wherein the at least one metal-rich alloy further comprises zirconium.

11. A method of fabricating the ceramic matrix composite material according to claim 10, comprising:
infiltrating at least one eutectic alloy constituent, at least one metal-rich alloy constituent, or combinations thereof, into, around and in contact with at least one ceramic fiber reinforcement comprising at least one ceramic fiber or at least one ceramic fiber tow, and a carbon source material;
reacting either the at least one eutectic alloy constituent or the at least one metal-rich alloy constituent with the carbon source material;
forming at least one matrix material within, around and in contact with the at least one ceramic fiber or the at least one ceramic fiber tow, the at least one matrix material comprising at least one eutectic alloy, at least one metal-rich alloy, and combinations thereof;
wherein the at least one eutectic alloy or at least one metal-rich alloy comprises silicon and at least one of the following alloy constituents: zirconium, hafnium, tungsten, tantalum, molybdenum, niobium, and iridium;
wherein either the at least one eutectic alloy or the at least one metal-rich alloy comprises a melting point range of approximately 1,250°C to approximately 1,650°C.

12. The method of claim 11, wherein the matrix material further comprises at least one silicide, at least one carbide, residual free silicon, or combinations thereof.

13. The method of claim 11 or 12, further comprising infiltrating the carbon source material into, around and in contact with the at least one ceramic fiber or the at least one ceramic fiber tow of the at least one ceramic fiber reinforcement, wherein the step of infiltrating comprises at least one infiltration technique comprising any one of the following: chemical vapor infiltration, chemical vapor deposition, physical vapor deposition, atomic layer deposition, molecular-beam epitaxy, and combinations thereof.
